(19) Europäisches Patentamt

European Patent Office

Office européen des brevets

(11) EP 1 380 613 A1

(12) EUROPEAN PATENT APPLICATION

(43) Date of publication:
14.01.2004 Bulletin 2004/03

(51) Int Cl.⁷: C08J 3/28, C08L 23/10

(21) Application number: 02077723.1

(22) Date of filing: 09.07.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicant: ATOFINA Research
7181 Seneffe (Feluy) (BE)

(72) Inventors:
• Olivier, Dominique
7181 Seneffe (Feluy) (BE)
• Michel, Jacques
7181 Seneffe (BE)
• Dupire, Marc
7022 Mons (BE)

(54) **Long chain branching polypropylene**

(57) The invention discloses a process for producing polypropylene having increased melt strength by irradiating polypropylene in pellet form with an electron beam having an energy of from 0.5 to 25 MeV, delivered by an accelerator having a power of from 50 to 1000 kW and with a total radiation dose of from 10 to 120 kGray, characterised in that the irradiation is carried out in the presence of air.

**Description**

The present invention relates to a method for the production of polypropylene having improved properties, in particular high melt strength. In particular, the present invention relates to a process for the production of polypropylene having improved properties by irradiating polypropylene with a high energy electron beam.

Polypropylene resin is used in a variety of different applications. However, linear polypropylene resin suffers from the problem of having a low melt strength, which restricts the use of polypropylene in a number of applications because the polypropylene is difficult to process. It is known in the art to increase the melt strength of polypropylene, for example by irradiating the polypropylene with an electron beam. It is known that electron beam irradiation significantly modifies the structure of a polypropylene molecule. The irradiation of polypropylene results in chain scission and grafting (or branching) which can occur simultaneously. Up to a certain level of irradiation dose, it is possible to produce from a linear polypropylene molecule having been produced using a Ziegler-Natta catalyst, a modified polymer molecule having free-end long branches, otherwise known as long chain branching.

For example, EP-A-190,889 or US-A-5,541,236 disclose a process for irradiating polypropylene to increase the melt strength thereof. It is disclosed that a linear propylene polymer material is irradiated under nitrogen with high energy ionising radiation, preferably an electron beam, at a dose rate in the range of from about 1 to $1\times10^4$ Mrads per minute for a period of time sufficient for the appearance of long chain branching concomitantly with chain scission, but insufficient to cause gelation of the material. Thereafter, the material is maintained under the same inert environment, for a period of time sufficient for a significant amount of long chain branches to form. Finally, the material is treated to deactivate substantially all free radicals present in the irradiated material. It is disclosed that, for an electron beam, the electrons are beamed from an electron generator having an accelerating potential of from 500 to 4000 kV. Typically, the finely divided linear polypropylene material to be irradiated is conveyed on a conveyor belt beneath an electron beam generator which continuously irradiates the polypropylene particles as they are translated there-under by the conveyor belt. By finely divided it is meant in the present application that the typical average particle size is of the order of 0.25 mm. At a given melt flow rate, the resultant polypropylene has improved melt strength as a result of the creation of long chain branches. A characteristic of the process disclosed in EP-A-190,889 is that the production of the irradiated polypropylene has to be performed under stringent conditions of inert atmosphere.

In the prior art irradiation processes, the presence of active oxygen such as available in air was very detrimental to the production of long chain branching polypropylene, as it reacted with ionised polypropylene. It had therefore to be eliminated by working under vacuum or by replacing part or all of air by an inert gas such as nitrogen. During the preparation and irradiation steps, the active oxygen content had to be kept at a concentration lower than 40 ppm.

It is known in the art that oxygen promotes chain scission leading to a rapid decline in the polymer molecular weight, especially when the resin to be irradiated is in powder form. This phenomenon is described for example in Veselvskii et al. (Veselvski, R. A., Lchenko, S. S. and Karpov, V. L., in "Some problems of the radiation chemistry of polypropylene.", Poly. Sci. USSR, 10, 881, 1968.) or in El Sayed et al. (El Sayed A. Hegazy, Tadao Seguchi, Kazuo Arakawa and Sueo Hachi, in "Radiation-induced oxidative degradation of isotactic polypropylene.", Journ. Of Appl. Polym. Sci., 26, 1361, 1981.) or in Carlsson et al. (Carlsson, D.J. and Chmela S., in "Polymers and high energy irradiation: degradation and stabilization." Mechanisms of polymer degradation and stabilization, Elsevier Applied Sci., p. 109, 1990.)

The main oxidative reactions occurring during irradiation of a polymer resin are as follows:

$$R\text{ -}R \rightarrow R^{\cdot} + R^{\cdot} \tag{1}$$

$$R^{\cdot} + O_2 \rightarrow RO_2^{\cdot} \tag{2}$$

$$RO_2^{\cdot} + RH \rightarrow ROOH + R^{\cdot} \tag{3}$$

$$RO_2^{\cdot} + R^{\cdot} \rightarrow ROOR \tag{4}$$

$$RO_2^{\cdot} + RO_2^{\cdot} \rightarrow ROOR + O_2 \tag{5}$$

$$ROOH \rightarrow RO^{\cdot} + {}^{\cdot}OH \qquad (6)$$

$$RO^{\cdot} \rightarrow R'{=}O + R''^{\cdot} \qquad (7)$$

In the processes involving polymer ionisation, oxygen plays a dominant role in degradation reactions. This comes from both the oxidative chain reaction and the formation of molecular products such as hydroperoxide groups as described by reactions (2) and (3). These groups decompose slowly even at room temperature to re-initiate oxidation chain processes as described by reactions (6) and (7). Polymer backbone scission reaction results both from the decomposition of hydroperoxide species in alkoxyl radicals as described by reaction (6) followed by the β scission of these radicals as described by reaction (7) and from peroxyl radicals described by reaction (2) and explained by Carlson et al. (Carlson, D.J. and Chmela, S., in "Polymers and high energy irradiation: degradation and stabilization, Mechanisms of polymer degradation and stabilization.", Elsevier Applied Science, p.109, 1990).

The kinetics of post irradiation oxidation has been analysed and quantitavely decribed by Neudörfl (Neudörfl, P., in "Zur kinetik der Oxydation von bestrahltem Polypropylen.", Kolloid Zeitschrift für Polymeren, 224, 132, 1967.), who discloses a relationship between the decrease of the free radicals available for long chain branching and the consumption of oxygen.

It has also been observed for example by Mukkerjee et al. (Mukkerjee, A. K., Gupta, B. D. and Sharma P. K., in "Radiation-Induced changes in Polyolefins", Rev.Macromolec.Chem.Phys.C26 (3), 415, 1986) or by Yoshii et al. (Yoshii, F., Sasaki, T., Makuuchi, K., Meligi, G., Rabei, A. M. and Nishimoto, S., in "Polymer degradation and stability.", 49, 315, 1995) that the presence of air during ionisation also affects negatively the mechanical properties of ionised polypropylene.

It has been speculated that the presence of additives in resins could contribute to limit the degradation of their properties upon the irradiation and post-irradiation, but the literature is often contradictory about the efficiency of additives against irradiation effects. Conventional radical scavengers such as hindered phenols can reduce the oxidation reactions but an intense yellow discoloration resulting from the formation of compounds such as stilbene or quinones occurs upon irradiation of the phenols. Furthermore, large fractions of the initial additives can be destroyed or chemically grafted during and after irradiation. Additives can also react with free radicals thereby decreasing the formation of long chain branching (Carlson, D.J. and Chmela, S., in "Polymers and high energy irradiation: degradation and stabilization, Mechanisms of polymer degradation and stabilization.", Elsevier Applied Science, p.109, 1990).

There is thus a need to limit the degradation of irradiated polymer without eliminating or reducing the amount of oxygen in the atmosphere and/or without using additives.

It is an aim of the present invention to provide a process for producing, under air atmosphere, polypropylene with long chain branching.

It is also an aim of the present invention to provide long chain branching polypropylene with improved melt strength.

Accordingly, the present invention discloses a process for producing polypropylene having increased melt strength by irradiating polypropylene in pellet form with an electron beam having an energy of from 0.5 to 25 MeV, delivered by an accelerator having a power of from 50 to 1000 kW and with a radiation dose of from 10 to 120 kGray, characterised in that the irradiation is carried out in the presence of air.

The process can be carried out for other types of irradiation sources such as for example γ Rays.

The energy of the electron beam is preferably of from 5 to 10 MeV. The power of the accelerator is preferably of from 120 to 600 kW, and more preferably, it is about 200 kW. The total radiation dose is preferably of from 40 to 100 kGy.

The total irradiation dose can be delivered to the polypropylene product either in one pass or in several passes under the electron beam. For example, four passes each delivering a dose of 20 kGy can replace a unique higher irradiation dose.

The polypropylene may be a homopolymer of propylene or a random or block copolymer of propylene and one or more olefins and/or dienes selected from ethylene and C4 to C10 1-olefins or dienes, which may be linear or branched. The polypropylene homopolymer may be reinforced by rubber particles such as for example ethylene propylene rubber (EPR) or ethylene propylene diene monomer (EPDM), typically in an amount of up to 30 wt%. The polypropylene may be a terpolymer optionally with a diene, for example norbornadiene, as a comonomer. The polypropylene can be prepared with any catalyst system known in the field of propylene polymerisation, preferably a metallocene catalyst system is used.

The polymer may contain any filler such as for example glass fibres, carbon nanotubes, nanoclays, chalk or talc, typically used to reinforce the polymer's properties.

The improved long chain branching can be measured through the determination of the branching index. The branching index as mentioned in the present patent application is obtained by the ratio of weight average molecular weight Mw values inferred from rheological measurement at zero shear viscosity and at crossover points as fully described by Michel, J. C. in SPE ANTEC, Conf. Proceedings, paper 359, 2002.

The present invention also discloses a method for producing polypropylene with improved melt strength, said process comprising the steps of:

a) extruding the polypropylene fluff under nitrogen and with little or no antioxidant additives to produce polypropylene pellets or semi-finished products;

b) optionally, packaging the pellets under air in conventional industrial bags;

c) placing the bags or the unbagged pellets arranged in uniform layer, under air on a continuously moving conveyor that passes under the electron beam;

d) irradiating the polypropylene under air with the electron beam of step c) said electron beam having an energy of from 0.5 to 25 MeV and with a dose of from 10 to 120 kGy;

e) optionally thermally treating the irradiated pellets at temperatures below the melting point in order to kill the free radicals before polymer re-extrusion;

f) re-extruding the polypropylene with antioxidant additives and, optionally with non-irradiated material, under nitrogen, said antioxidant being added to the extruder either simultaneously with the polypropylene or later along the length of the extruder;

g) granulating and packaging under air.

The polypropylene pellets produced in step a) are defined as solid, non-porous beads having a weight comprised between 1 and 1000 mg.

The semi-finished products of step a) can be for example chopped strands or staple fibres or other.

The non-irradiated material optionally added in step f) can be any polymer such as for example polyethylene, polypropylene or a copolymer.

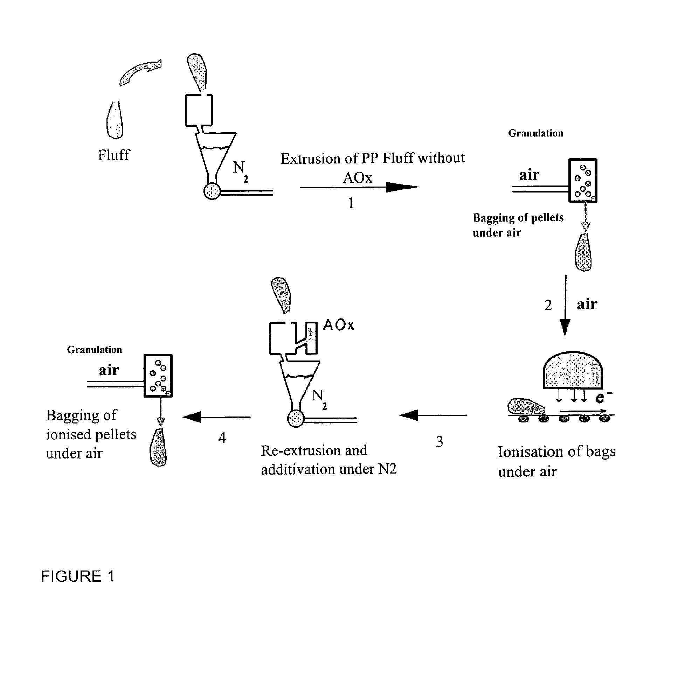

The configuration is represented in Figure 1, that describes the various steps of the present invention. The conveyor speed is adjusted in order to achieve the desired dose. Typically, it is of from 0.5 to 20 m/min, preferably it is of from 1 to 10 m/min.

Typically, the polypropylene is bagged in conventional industrial bags or it is uniformly spread unbagged on the conveyor belt. The optimal thickness of the bags or of the polypropylene layer is determined by the energy of the electron beam: it increases with increasing energy of the electron beam. The irradiation is carried out under air.

The degradation by oxidation is much lower for pellets than for powders because the pellets have a much smaller specific surface area than the powders, thereby limiting the effect of atmospheric oxygen.

The antioxidant additives are then added to the pellets either in powder form or under the form of a master batch and the pellets are extruded and granulated under nitrogen atmosphere at temperatures that are typical for polypropylene.

The time elapsed between the irradiation and the second extrusion processes can be of from a few minutes to several weeks, at a temperature of the order of 25 °C (room temperature).

The polypropylene (PP) irradiated according to the present invention has improved melt strength. This high melt strength provides an outstanding processing behaviour that allows the long chain branching polypropylene produced in accordance with the present invention, to be suitable particularly for producing films, sheets, fibres, pipes, foams, hollow articles, panels and coatings.

The melt strength is measured using a CEAST rheometer (Rheoscope 1000) equipped with a capillary die and a rotating wheel as a take-up device. Molten polymer is extruded through the capillary die by application of a pressure resulting from the displacement of a piston. The molten extrudate is uniaxially stretched before crystallisation by wrapping the fibre around the rotating wheel. In the test, the piston displacement rate is fixed and the speed of the rotating take-up wheel is linearly changed at constant acceleration until the fibre, becoming very thin, breaks. The tensile force is recorded during the test. The test was run with a cylindrical die having a length/diameter ratio of 5mm/1mm. The diameter of the rotating wheel is 120 mm and the displacement rate of the piston is 2 mm/min giving an extrudate throughput of 2.36 $mm^3$/min. The acceleration of the rotating wheel is constant at 10 rpm/100 seconds, or 0.000628 $m/s^2$. The extrusion temperature is 230°C. During the melt strength experiments, the recorded force rapidly reaches a constant value that remains independent from wheel rpm up to rupture.

The melt strength is defined as the maximum tensile force recorded during the experiment.

It is observed that, at equivalent ionisation doses, the melt strength of a polypropylene resin ionised under air, following the method of the present invention, is equivalent to that of a polypropylene resin ionised under nitrogen atmosphere.

The invention will now be described in greater detail with reference to the following non-limiting examples.

Two linear polypropylene resins have been tested , a metallocene-produced polypropylene resin, mPP and a Ziegler-natta-produced polypropylene resin, ZNPP. Their properties are described in Table I.

TABLE I.

| Properties | mPP | ZNPP |
|---|---|---|
| MFI (g/10 min) | 4.9 | 1.6 |
| Mn (kDa) | 92 | 66.4 |
| Mw (kDa) | 234.5 | 435.1 |
| Mz kDa) | 461 | 1724 |
| D | 2.5 | 6.5 |
| Melt strength at 230 °C (mN) | 5.6 | 9 |

In this Table, MFI represents the melt flow index measured according to the method of standard test ASTM D 1238 under a load of 2.16 kg and at a temperature of 230 °C.
Mn, Mw and Mz represent respectively the number average molecular weight, the weight average molecular weight and the z average molecular weight, measured by gel permeation chromatography (GPC). D represents the polydispersity index that is the ratio Mw/Mn of the weight average molecular weight to the number average molecular weight.

Example 1 and Comparative Example 1.

The metallocene-produced polypropylene fluff mPP kept under a nitrogen atmosphere during its storage, was extruded and pelletised without antioxidant under nitrogen at 220°C on a single screw extruder. The typical average pellet weight was of the order of 25 mg.
GPC analysis showed that no significant polymer degradation occurred during extrusion.
The pellets were then bagged under air in standard 25 kg bags, prepared from polyethylene film, without gas barrier layer. The filled bags had a thickness of about 15 cm.
Then, the bags of polypropylene in pellet form were ionised under air using an electron beam having an energy of about 10MeV, and generated by an electrons accelerator having power of about 190 kW. The dose was about 60 kGy.
3000 ppm of anti-oxidant sold by CIBA as formulation B215 and 500 ppm of calcium stearate were added to the ionised pellets and the mixture was re-extruded under nitrogen on the extruder that was used for the first extrusion.
In comparative example 1, the same metallocene-produced polypropylene fluff mPP kept under nitrogen during its storage was ionised also under air.
The same 3000 ppm of anti-oxidant and 500 ppm calcium stearate were added to the ionised fluff and the mixture was extruded under nitrogen on the extruder of example 1.
The melt flow index MFI, the melt strength MS, the number, weight and z average molecular weights and the molecular weight distribution represented by the polydispersity index D and the branching index of the irradiated pellets from example 1 and comparative example 1 are displayed in Table 2. The branching index is a measure of the amount of long chain branching: a branching index of one represents a linear polypropylene and it decreases with increasing branching.

TABLE II.

| | Example 1 | Comparative Ex. 1 |
|---|---|---|
| Pre-extrusion | Yes, under N2 | No |
| Bagging/ Ionisation | Air | Air |
| Additivation after ionisation | Yes | Yes |
| Extrusion cond. | N2 | N2 |
| MFI (g/10 min) | 13.8 | 53 |
| Mn (kDa) | 55.7 | 45.1 |
| Mw (kDa) | 346 | 154.8 |
| Mz (kDa) | 1601 | 509.1 |

TABLE II. (continued)

|  | Example 1 | Comparative Ex. 1 |
|---|---|---|
| D | 6.2 | 3.4 |
| MS at 230 °C (mN) | 14.3 | 4.9 |
| Branching index | 0.63 | 0.87 |

Due to the occurrence of chain scission, long chain branching and oxidation reactions during irradiation, the melt flow index MFI of irradiated resins increases. Nevertheless, when compared to the MFI of 4.9 g/10 min of the non-irradiated resin, the MFI of the resin irradiated in pellet form and under air increases much less than that of the resin irradiated in fluff form under nitrogen atmosphere.

Because of the formation of high molecular weight branched molecules during irradiation, the molecular weight distribution (MWD) curve of the irradiated resin is broader than that of the non-irradiated resin. As can be seen from Table II, the resin irradiated in pellet form of example 1 is characterised by a broader molecular weight distribution curve than that of the resin irradiated in fluff form of comparative example 1.

At a given MFI, the branched molecules increase the melt strength of resin. As the MFI is lower and as the amount of branched molecules formed during the irradiation of the resin in pellet form is higher than those of the resin irradiated in fluff form, the melt strength of the resin of example 1 is much higher than that of the resin of comparative example 1. This can be observed in Table II.

Example 2 and Comparative Example 2.

In example 2, the Ziegler-Natta-produced polypropylene fluff ZNPP kept under a nitrogen atmosphere during its storage, was extruded and pelletised without antioxidant under nitrogen at 220°c on a single screw extruder. The typical average pellet weight was of the order of 25 mg.

The pellets were then bagged under air in standard 25 kg bags, prepared from polyethylene film, without gas barrier layer. The filled bags had a thickness of about 15cm.

The bags of polypropylene in pellet form were ionised under air using an electron beam having an energy of about 10MeV, and generated by an electrons accelerator having power of about 190 kW. The dose was about 60 kGy.

3000 ppm of anti-oxidant sold by CIBA as formulation B215 and 500 ppm of calcium stearate were added to the ionised pellets and the mixture was re-extruded under nitrogen on the extruder that was used for the first extrusion.

In comparative example 2, the same Ziegler-Natta-produced polypropylene fluff ZNPP kept under nitrogen during its storage was ionised also under air.

The same 3000 ppm of anti-oxidant and 500 ppm calcium stearate were added to the ionised fluff and the mixture was extruded under nitrogen on the extruder used for the first extrusion.

The melt flow index MFI, the melt strength MS, the number, weight and z average molecular weights and the molecular weight distribution represented by the polydispersity index D of the irradiated pellets of example 2 and comparative example 2 are displayed in Table III.

TABLE III.

|  | Example 2 | Comparative Ex. 2 |
|---|---|---|
| Pre-extrusion | Yes, under N2 | No |
| Bagging/ Ionisation | Air | Air |
| Additivation after ionisation | Yes | Yes |
| Extrusion cond. | N2 | N2 |
| MFI (g/10 min) | 8.6 | 127 |
| Mn (kDa) | 46.6 | 61.7 |
| Mw (kDa) | 272.3 | 156.1 |
| Mz (kDa) | 1040.4 | 632.3 |
| D | 5.8 | 4.9 |
| MS at 230 °C (mN) | 11.7 | 3 |

As already discussed in example 1, the MFI of irradiated resin increases. The results displayed in Table III show however that the MFI of the resin of example 2 irradiated under air in pellet form increases much less than that of the resin of comparative example 2 irradiated in fluff form.

The amount of chain scission produced during irradiation was higher for the Ziegler-Natta-produced resin than for the metallocene-produced resin. Consequently the amount of high molecular weight branched molecules formed was lower for the Ziegler-Natta-produced resin than for the metallocene-produced resin. The polydispersity of the irradiated resins of example 2 and comparative example 2 respectively did not increase with respect to the non-irradiated resin, but it was higher for the resin of example 2 irradiated in pellet form than for the resin of comparative example 2 irradiated in fluff form.

Resulting from the formation of long chain branches and from low MFI, the melt strength of the resin of example 2 irradiated in pellet form was much higher than that of the resin of comparative example 2 irradiated in fluff form.

Example 3 and Comparative Example 3.

In example 3, the resin and the operating conditions used for storage, bagging, extrusion, ionisation and re-extrusion were the same as those of example 1.

In comparative example 3, 2500 ppm of the anti oxidant sold by CIBA were added to the fluff during the first extrusion. The resin with additives was ionised under air and re-extruded under nitrogen without any further additives on the same extruder as that used for the first extrusion.

TABLE IV.

|  | Example 3 | Comparative Ex. 3 |
|---|---|---|
| Additivation before ionisation | No | Yes |
| Pre-extrusion | Yes, under N2 | Yes, under N2 |
| Bagging/ Ionisation | Air | Air |
| Additivation after ionisation | Yes | No |
| Extrusion cond. | N2 | N2 |
| MFI (g/10 min) | 13.8 | 34.8 |
| Mn (kDa) | 55.7 | 58.5 |
| Mw (kDa) | 346 | 171.3 |
| Mz (kDa) | 1601 | 445.9 |
| D | 6.2 | 2.9 |
| MS at 230 °C (mN) | 14.3 | 4 |
| Yellow index | 2.6 | 37.3 |

The presence of additives during ionisation has a negative influence on the branching and consequently decreases the melt strength of the ionised resin as can be seen in Table IV. The additives also strongly increase the coloration of the ionised pellets as represented in Table IV by the yellow index YI. The yellow index is defined here as the chromatic deviation with respect to a white standard in the wave length range of from 570 to 580 nm. It is measured on the colorimeter HUNTERLAB D25M optical sensor linked to a Toshiba T1000 PC. The apparatus is calibrated respectively with a black plate, a white plate and a reference plate. The 95x95x49 mm measuring vessel is then filled with the sample (the pellets) and the yellow index is evaluated directly by the PC and displayed on the computer screen.

Example 4 and Comparative Example 4.

In example 4, the resin and the operating conditions used for storage, bagging, extrusion, ionisation and re-extrusion of the resin were the same as those of example 2.

In comparative example 4, the polypropylene fluff of example 2 (ZNPP), kept under a nitrogen atmosphere during its storage, was extruded under nitrogen at 220°c on a single screw extruder. The polypropylene pellets were packed under nitrogen in industrial bags with a gas barrier layer, and then ionised with the same irradiation source as that used in Example 4, also under nitrogen atmosphere.

After irradiation, 3000 ppm of anti-oxidant sold by CIBA as formulation B215 and 500 ppm of calcium stearate were added to the ionised pellets and the mixture was re-extruded under nitrogen on the extruder that was used for the first extrusion.

The results are displayed in Table V.

TABLE V.

|  | Example 4 | Comparative Ex. 4 |
|---|---|---|
| Pre-extrusion | Yes, under N2 | Yes, under N2 |
| Bagging/ Ionisation | Air | N2 |
| Additivation after ionisation | Yes | Yes |
| Extrusion cond. | N2 | N2 |
| MFI (g/10 min) | 8.6 | 9.3 |
| Mn (kDa) | 46.6 | 47.6 |
| Mw (kDa) | 272.3 | 266.8 |
| Mz (kDa) | 1040.4 | 1008.4 |
| D | 5.8 | 5.6 |
| MS at 230 °C (mN) | 11.7 | 12 |
| Yellow index | 7 | 7.5 |

The pellets have a much lower specific surface area than the fluff thereby decreasing the maximum concentration of adsorbed oxygen on the resin. The presence of air during the ionisation of the pellets is therefore less detrimental to the properties of ionised polypropylene than it is for a fluff.

It can be seen in Table V that the properties of pellets ionised under air according to the process of the invention (example 4) are equivalent to these of pellets ionised under nitrogen (comparative example 4), but the method according to the present invention requires less stringent and therefore less costly operating conditions.

## Claims

1. A process for producing polypropylene having increased melt strength by irradiating polypropylene in pellet form with an electron beam having an energy of from 0.5 to 25 MeV, delivered by an accelerator having a power of from 50 to 1000 kW and with a radiation dose of from 10 to 120 kGray, **characterised in that** the irradiation is carried out in the presence of air.

2. The process according to claim 1 wherein the electron beam has an energy of from 5 to 10 MeV.

3. The process according to claim 1 or claim 2 wherein the accelerator has a power of from 120 to 600 kW.

4. The process according to any one of the preceding claims wherein the total radiation dose is of from 40 to 100 kGray.

5. A method for producing polypropylene with improved melt strength, comprising the steps of:

   a) extruding the polypropylene fluff under nitrogen and with little or no antioxidant additives to produce polypropylene pellets or semi-finished products;
   b) optionally, packaging the pellets under air in conventional industrial bags;
   c) placing the bags or the unbagged pellets arranged in uniform layer, under air on a continuously moving conveyor that passes under the electron beam;
   d) irradiating the polypropylene under air with the electron beam of step c) said electron beam having an energy of from 0.5 to 25 MeV and with a dose of from 10 to 120 kGy;
   e) optionally thermally treating the irradiated pellets at temperatures below the melting point in order to kill the free radicals before polymer re-extrusion;
   f) re-extruding the polypropylene with antioxidant additives and, optionally with non-irradiated material, under nitrogen, said antioxidant being added to the extruder either simultaneously with the polypropylene or later along the length of the extruder;

g) granulating and packaging under air.

**6.** The method according to claim 5, wherein the electron beam has an energy of from 5 to 10 MeV.

**7.** The method according to claim 5 or claim 6 wherein the total dose of irradiation is of from 40 to 100 kGray.

**8.** The method according to any one of claims 5 to 7 wherein the irradiation dose can be delivered in several passes under the electron beam.

**9.** The method according to any one of claims 5 to 8 wherein during irradiation the polypropylene is conveyed past the electron beam at a speed of from 0.5 to 20 m/min.

**10.** The method according to any one of claims 5 to 9 wherein no antioxidant additives are added prior to ionisation.

**11.** The method according to any one of claims 5 to 10 wherein the time elapsed between the irradiation and the second extrusion is of from a few minutes to several weeks, at a temperature of the order of 25 °C.

Fluff

Extrusion of PP Fluff without
AOx

1

$N_2$

Granulation

air

Bagging of pellets
under air

2 | air

Ionisation of bags
under air

$e^-$

3

Re-extrusion and
additivation under N2

AOx

$N_2$

4

Granulation

air

Bagging of
ionised pellets
under air

FIGURE 1

**European Patent Office**

## EUROPEAN SEARCH REPORT

Application Number

EP 02 07 7723

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | EP 0 190 889 A (HIMONT INC) 13 August 1986 (1986-08-13) * example 1 * --- | 1-11 | C08J3/28 C08L23/10 |
| A | EP 0 634 441 A (HIMONT INC) 18 January 1995 (1995-01-18) * example 1 * ----- | 1-11 | |

TECHNICAL FIELDS SEARCHED (Int.Cl.7)

C08J
C08F
C08L

The present search report has been drawn up for all claims

| Place of search | Date of completion of the search | Examiner |
|---|---|---|
| MUNICH | 2 December 2002 | Hoffmann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 07 7723

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2002

| Patent document cited in search report | | Publication date | Patent family member(s) | | Publication date |
|---|---|---|---|---|---|
| EP 0190889 | A | 13-08-1986 | AT | 88196 T | 15-04-1993 |
| | | | AU | 616106 B2 | 17-10-1991 |
| | | | AU | 5215890 A | 19-07-1990 |
| | | | AU | 597241 B2 | 31-05-1990 |
| | | | AU | 5284386 A | 07-08-1986 |
| | | | AU | 7942891 A | 12-09-1991 |
| | | | BR | 8600413 A | 14-10-1986 |
| | | | CA | 1280543 A1 | 19-02-1991 |
| | | | CN | 86100791 A ,B | 04-02-1987 |
| | | | CN | 1041769 A ,B | 02-05-1990 |
| | | | DE | 3688258 D1 | 19-05-1993 |
| | | | DE | 3688258 T2 | 29-07-1993 |
| | | | EP | 0190889 A2 | 13-08-1986 |
| | | | IN | 166935 A1 | 11-08-1990 |
| | | | IN | 170549 A1 | 11-04-1992 |
| | | | JP | 7045551 B | 17-05-1995 |
| | | | JP | 62121704 A | 03-06-1987 |
| | | | NO | 860330 A | 01-08-1986 |
| | | | NO | 167039 B | 17-06-1991 |
| | | | PT | 81945 A ,B | 01-02-1986 |
| | | | RU | 2031906 C1 | 27-03-1995 |
| | | | US | 5731362 A | 24-03-1998 |
| | | | US | 4916198 A | 10-04-1990 |
| | | | US | 5554668 A | 10-09-1996 |
| | | | US | 5591785 A | 07-01-1997 |
| | | | ZA | 8600528 A | 24-09-1986 |
| EP 0634441 | A | 18-01-1995 | US | 5414027 A | 09-05-1995 |
| | | | AT | 166368 T | 15-06-1998 |
| | | | CA | 2128064 A1 | 16-01-1995 |
| | | | CN | 1105033 A ,B | 12-07-1995 |
| | | | DE | 69410357 D1 | 25-06-1998 |
| | | | DE | 69410357 T2 | 08-10-1998 |
| | | | EP | 0634441 A1 | 18-01-1995 |
| | | | JP | 7138430 A | 30-05-1995 |
| | | | MX | 9405377 A1 | 31-01-1995 |
| | | | US | 5541236 A | 30-07-1996 |
| | | | US | 5605936 A | 25-02-1997 |

EPO FORM P0459

For more details about this annex : see Official Journal of the European Patent Office, No. 12/82